# DEMANDE DE BREVET EUROPEEN

(11) **EP 3 575 208 A1**
(43) Date de publication de la demande: **04.12.2019**
(21) Numéro de dépôt: 19173690.9
(22) Date de dépôt: 10.05.2019
(51) Int. Cl.: B64C 23/06, B64D 29/02

(54) **AÉRONEF COMPRENANT UNE PAROI AÉRODYNAMIQUE ET AU MOINS UN GÉNÉRATEUR DE TOURBILLONS**

(30) Priorité: 30.05.2018 FR 1854655
(71) Demandeur: Airbus Operations, 31060 Toulouse (FR)
(72) Inventeur: KRIER, Erwan, 31470 Fonsorbes (FR); DE OLIVEIRA, Grégory, 31140 Saint Alban (FR); BOURDIEU, Thomas, 31330 Launac (FR); BAS, Adrien, 31200 Toulouse (FR)
(74) Mandataire: Fantin, Laurent

(57) **Abrégé**

L'invention a pour objet un aéronef comprenant au moins une paroi aérodynamique (42) présentant des surfaces externe et interne (42.1, 42.2) et au moins générateur de tourbillons (40) qui comprend :
- au moins une paroi active (46) en saillie par rapport à la surface externe (42.1) de la paroi aérodynamique (42),
- un système de liaison (54) reliant le générateur de tourbillons (40) à la paroi aérodynamique (42) qui comporte :
∘ au moins un support en partie plaqué contre la surface interne (42.2) de la paroi aérodynamique (42),
∘ au moins un premier élément de fixation (58, 58') reliant le support et la paroi active (46),
∘ au moins un deuxième élément de fixation (60, 60') reliant le support et la paroi aérodynamique (42) et présentant une tête affleurante au niveau de la surface externe (42.1) de la paroi aérodynamique (42).

Cette configuration permet de limiter l'apparition d'une traînée parasite.

## Description

La présente demande se rapporte à un aéronef comprenant une paroi aérodynamique et au moins un générateur de tourbillons.

Comme illustré sur les figures, un aéronef 10 comprend plusieurs ensembles propulsifs 12 qui présentent chacun une nacelle 14 entourant une motorisation. La nacelle 14 comprend au moins une paroi aérodynamique 16, comme par exemple un capot, comportant au moins un générateur de tourbillons 18 appelé également aileron ou aigrette (ou strake en anglais).

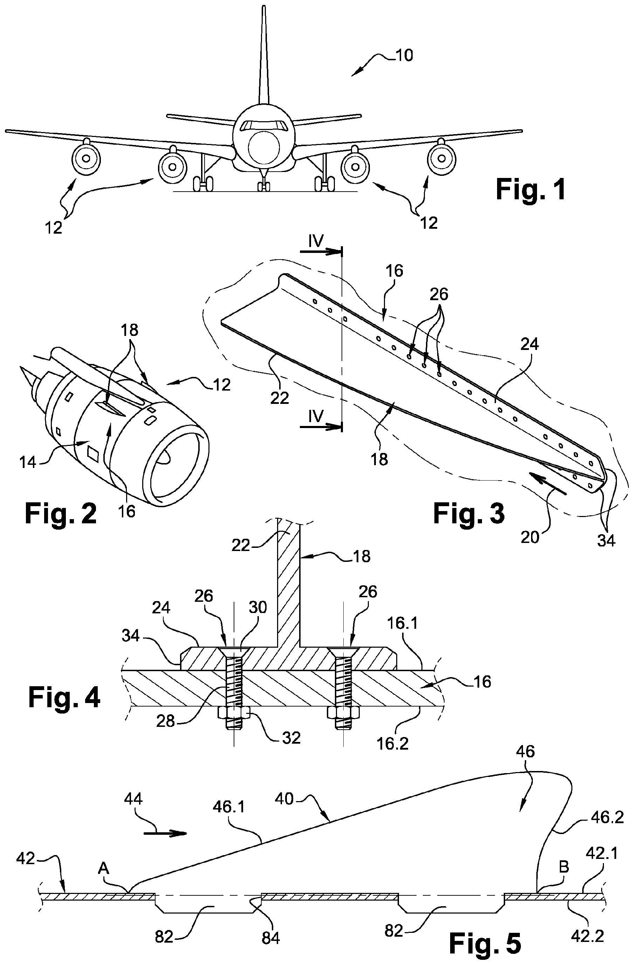

Selon un mode de réalisation visible sur les figures 3 et 4, la paroi aérodynamique 16 présente une surface externe 16.1 orientée vers l'extérieur de la nacelle 14 contre laquelle s'écoule un flux d'air 20 et une surface interne 16.2 orientée vers l'intérieur de la nacelle 14. Le générateur de tourbillons 18 comprend une section transversale en T et présente une paroi active 22 ainsi qu'une embase 24 en saillie par rapport à la surface externe 16.1 de la paroi aérodynamique 16 et reliée à cette dernière par des éléments de fixation 26.

L'embase 24 s'étend de part et d'autre de la paroi active 22 et les éléments de fixation 26 sont agencés selon deux rangées disposées de part et d'autre de la paroi active 22. Pour chaque élément de fixation 26, l'embase 24 et la paroi aérodynamique 16 comprennent chacune un trou traversant, le trou traversant de l'embase 24 présentant un chanfrein. En complément, chaque élément de fixation 26 comprend une tige 28 logée dans les trous traversants de l'embase 24 et de la paroi aérodynamique 16, une tête fraisée 30 logée au niveau du chanfrein du trou traversant de l'embase 24 ainsi qu'un système de blocage 32, comme un écrou par exemple, relié à la tige 28 et plaqué contre la paroi aérodynamique 16.

Les générateurs de tourbillons 18, positionnés de part et d'autre du mât au niveau du capot de la nacelle, permettent d'obtenir un gain en matière aérodynamique, notamment en retardant le décollement du flux d'air sur l'extrados de l'aile et en augmentant la portance durant les phases d'atterrissage.

Cependant, l'embase 24 du générateur de tourbillons présente un chant avant 34, en saillie par rapport à la surface externe 16.1 de la paroi aérodynamique 16, qui perturbe le flux d'air et génère une traînée parasite.

La présente invention vise à remédier à tout ou partie des inconvénients de l'art antérieur.

A cet effet, l'invention a pour objet un aéronef comprenant une paroi aérodynamique et au moins un générateur de tourbillons, ladite paroi aérodynamique présentant une surface externe sur laquelle s'écoule un flux d'air en vol et une surface interne opposée à la surface externe, le générateur de tourbillons comprenant au moins une paroi active en saillie par rapport à la surface externe de la paroi aérodynamique et un système de liaison reliant le générateur de tourbillons à la paroi aérodynamique.

Selon l'invention, le système de liaison comprend au moins un support en partie plaqué contre la surface interne de la paroi aérodynamique, au moins un premier élément de fixation reliant le support et la paroi active ainsi qu'au moins un deuxième élément de fixation reliant le support et la paroi aérodynamique et présentant une tête affleurante au niveau de la surface externe de la paroi aérodynamique.

L'invention permet d'éviter l'apparition de traînée parasite, avec un impact négligeable sur la masse embarquée et le temps d'assemblage.

Selon une autre caractéristique, le système de liaison comprend une première série d'éléments de liaison disposés d'un premier côté de la paroi active et une deuxième série d'éléments de liaison disposés d'un deuxième côté de la paroi active.

Selon un premier mode de réalisation, le générateur de tourbillons comprend, en plus de la paroi active, une embase qui présente une première face affleurant la surface externe de la paroi aérodynamique, au niveau de laquelle est prévue la paroi active, la paroi active et l'embase formant une unique pièce. En complément, chaque support est une platine, le (ou les) premier(s) élément(s) de fixation reliant l'embase et chaque platine ; la paroi aérodynamique comprend une découpe configurée pour loger l'embase, la découpe et l'embase présentant des pourtours identiques à un jeu de montage près.

Selon une autre caractéristique, l'embase comprend des première et deuxième parties, disposées de part et d'autre de la paroi active, et chaque platine s'étend de part et d'autre de l'embase et de la découpe. En complément, le système de liaison comprend une première série de premiers éléments de fixation disposés au niveau de la première partie de l'embase, une deuxième série de premiers éléments de fixation disposés au niveau de la deuxième partie de l'embase, une première série de deuxièmes éléments de fixation disposés d'un premier côté de la découpe et une deuxième série de deuxièmes éléments de fixation disposés d'un deuxième côté de la découpe.

Selon une configuration, le système de liaison comprend au moins une cale interposée entre chaque platine et l'embase et/ou la paroi aérodynamique.

Selon une autre caractéristique, le jeu de montage prévu entre la découpe et l'embase comprend un joint ou un mastic affleurant la surface externe de la paroi aérodynamique.

Selon un deuxième mode de réalisation, la paroi active comprend au moins un prolongement, en saillie par rapport à la surface interne de la paroi aérodynamique, et la paroi aérodynamique comprend au moins une découpe configurée pour loger la paroi active ou chaque prolongement, chaque découpe et la paroi active ou chaque prolongement ayant des pourtours identiques à un jeu de montage près. En complément, le système de liaison comprend au moins une cornière qui présente une première aile, plaquée contre le prolongement de la paroi active, et une deuxième aile plaquée contre la surface interne de la paroi aérodynamique, le (ou les) premier(s) élément(s) de fixation reliant le prolongement de la paroi active et la première aile de chaque cornière et le (ou les) deuxième(s) élément(s) de fixation reliant la paroi aérodynamique et la deuxième aile de chaque cornière.

Selon une configuration, le système de liaison comprend des première et deuxième cornières positionnées de part et d'autre de chaque prolongement de la paroi active, une première série de deuxièmes éléments de fixation reliant la deuxième aile de la première cornière et la paroi aérodynamique, une deuxième série de deuxièmes éléments de fixation reliant la deuxième aile de la deuxième cornière et la paroi aérodynamique, ainsi qu'une série de premiers éléments de fixation, chacun d'eux traversant les deux premières ailes des première et deuxième cornières et le prolongement.

Selon une autre caractéristique, le jeu de montage prévu entre chaque découpe de la paroi aérodynamique et la paroi active ou chaque prolongement comprend un joint ou un mastic affleurant la surface externe de la paroi aérodynamique.

D'autres caractéristiques et avantages ressortiront de la description de l'invention qui va suivre, description donnée à titre d'exemple uniquement, en regard des dessins annexés parmi lesquels :
- La figure 1 est une vue de face d'un aéronef,
- la figure 2 est une vue en perspective d'un ensemble propulsif de l'aéronef visible sur la figure 1,
- la figure 3 est une vue en perspective d'une partie d'une nacelle équipée d'un générateur de tourbillons qui illustre un mode de réalisation de l'art antérieur,
- la figure 4 est une coupe selon la ligne IV-IV de la figure 3,
- la figure 5 est une représentation schématique d'un générateur de tourbillons qui illustre un mode de réalisation de l'invention,
- la figure 6 est une coupe transversale d'une partie d'une paroi d'une nacelle d'aéronef équipée d'un générateur de tourbillons qui illustre un premier mode de réalisation de l'invention,
   La figure 7 est une vue en perspective d'une partie d'une paroi d'une nacelle d'aéronef équipée d'un générateur de tourbillons qui illustre le premier mode de réalisation de l'invention,
- la figure 8 est une coupe transversale d'une partie d'une paroi d'une nacelle d'aéronef équipée d'un générateur de tourbillons qui illustre un deuxième mode de réalisation de l'invention, et
- la figure 9 est une vue en perspective d'une partie d'une paroi d'une nacelle d'aéronef équipée d'un générateur de tourbillons qui illustre le deuxième mode de réalisation de l'invention.

Sur les figures 5 à 9, on a représenté en 40 un générateur de tourbillons positionné sur une paroi aérodynamique 42 d'une nacelle d'aéronef.

Bien que décrite appliquée à une nacelle d'aéronef, l'invention n'est aucunement limitée à cette application et peut être appliquée à toute paroi aérodynamique d'un aéronef, comme par exemple un fuselage, un empennage, une aile, un mât, une nacelle.

Une paroi aérodynamique 42 peut comprendre une unique plaque ou plusieurs plaques juxtaposées.

La paroi aérodynamique 42 présente une surface externe 42.1 contre laquelle s'écoule un flux d'air 44 en vol et une surface interne 42.2 opposée à la surface externe 42.1.

Pour la suite de la présente demande, les termes avant et arrière font référence au sens de l'écoulement du flux d'air 44, ce dernier s'écoulant en vol de l'avant vers l'arrière.

Par un générateur de tourbillons, on entend toute paroi en saillie par rapport à une paroi aérodynamique d'un aéronef configurée pour modifier un flux d'air s'écoulant à la surface de cette paroi aérodynamique. Un générateur de tourbillons est également appelé aileron, aigrette ou « strake » en anglais.

Selon différents modes de réalisation visibles sur les figures 5 à 9, le générateur de tourbillons 40 comprend au moins une paroi active 46, sensiblement plane, en saillie par rapport à la surface externe 42.1 de la paroi aérodynamique 42.Cette paroi active 46 comprend un bord d'attaque 46.1 et un bord de fuite 46.2. Le générateur de tourbillons 40 comprend une extrémité avant A et une extrémité arrière B, positionnées au niveau de la surface externe 42.1 de la paroi aérodynamique 42 lorsque le générateur de tourbillons 40 est monté.

Selon une configuration, la paroi active 46 a approximativement la forme d'un triangle. Ainsi, le bord d'attaque 46.1 comprend une première extrémité avant positionnée au niveau de la surface externe 42.1 de la paroi aérodynamique 42 et une deuxième extrémité arrière reliée au bord de fuite 46.2 et écartée de la surface externe 42.1 de la paroi aérodynamique 42.

Bien entendu, l'invention n'est pas limitée à cette configuration.

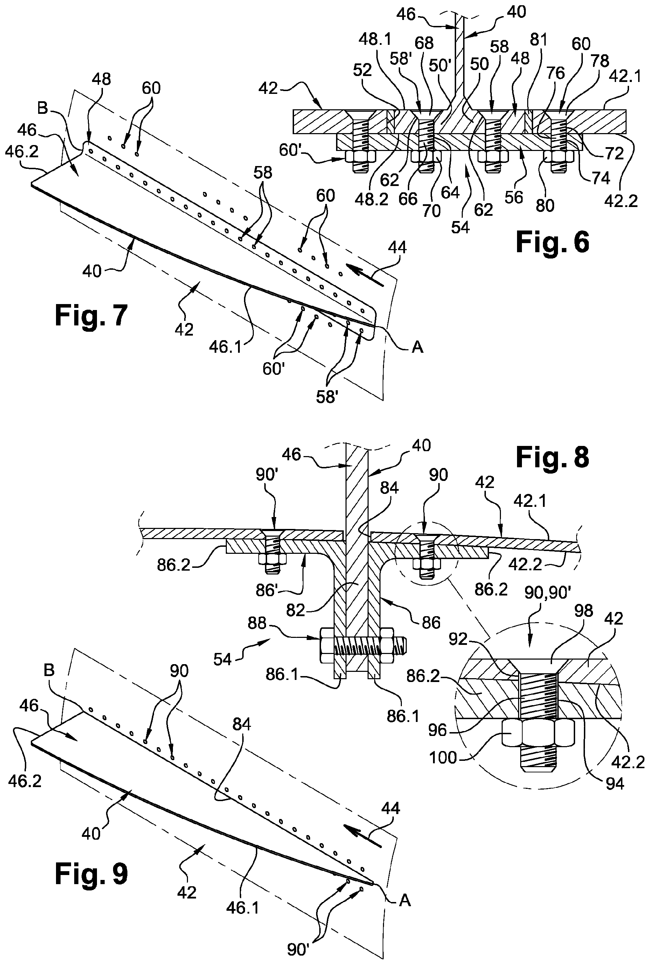

Selon un premier mode de réalisation visible sur les figures 6 et 7, le générateur de tourbillons 40 comprend, en plus de la paroi active 46, une embase 48 qui présente une première face 48.1 affleurant la surface externe 42.1 de la paroi aérodynamique 42, au niveau de laquelle est prévue la paroi active 46, et une deuxième face 48.2 qui peut être affleurante à la surface interne 42.2 de la paroi aérodynamique 42. La paroi active 46 et l'embase 48 forment une unique pièce.

Deux faces et/ou surfaces sont affleurantes si elles sont disposées dans le même plan et ne perturbent quasiment pas le flux d'air 44.

Selon une configuration, la paroi active 46 et l'embase 48 forment une unique pièce avec une section transversale en T et l'embase 48 comprend des première et deuxième parties 50, 50' disposées de part et d'autre de la paroi active 46.

En complément, la paroi aérodynamique 42 comprend une découpe 52 configurée pour loger l'embase 48 du générateur de tourbillons 40, la découpe 52 présentant un pourtour identique, au jeu de montage près, au pourtour de l'embase 48.

Selon le premier mode de réalisation, le générateur de tourbillons 40 comprend un système de liaison 54, reliant l'embase 48 du générateur de tourbillons 40 et la paroi aérodynamique 42, comportant au moins une platine 56 plaquée contre la deuxième face 48.2 de l'embase 48 et la surface externe 42.2 de la paroi active 42, au moins un premier élément de fixation 58 reliant la platine 56 et l'embase 48 et au moins un deuxième élément de fixation 60 reliant la platine 56 et la paroi aérodynamique 42.

Le système de liaison 54 comprend une seule platine 56 ou plusieurs platines 56 réparties sur la longueur du générateur de tourbillons 40 (la longueur correspondant à la dimension du générateur de tourbillons entre les première et deuxième extrémités A et B).

Lorsque la deuxième face 48.2 de l'embase 48 et la surface interne 42.2 de la paroi aérodynamique 42 ne sont pas affeurantes, le système de liaison 54 comprend au moins une cale interposée entre chaque platine 48 et l'embase 48 et/ou la paroi aérodynamique 42. Cette cale, optionnelle, permet de rattraper des jeux en cas de tolérances de formes qui ne sont pas bonnes afin d'obtenir une surface affleurante.

Selon une configuration, chaque platine 56 s'étend de part et d'autre de l'embase 48 et de la découpe 52 et le système de liaison 54 comprend une première série de premiers éléments de fixation 58 disposés au niveau de la première partie 50 de l'embase 48 positionnée d'un premier côté de la paroi active 46, une deuxième série de premiers éléments de fixation 58' disposés au niveau de la deuxième partie 50' de l'embase 48 positionnée d'un deuxième côté de la paroi active 46, une première série de deuxièmes éléments de fixation 60 disposés d'un premier côté de la découpe 52 et une deuxième série de deuxièmes éléments de fixation 60' disposés d'un deuxième côté de la découpe 52.

Pour chaque premier élément de fixation 58, 58', l'embase 48 comprend un trou traversant 62 qui présente un chanfrein au niveau de la première face 48.1 de l'embase 48 et la platine 56 comprend un trou traversant 64. En complément, chaque premier élément de fixation 58, 58' comprend une tige 66 logée dans les trous traversants 62, 64 de l'embase 48 et de la platine 56, une tête fraisée 68 logée au niveau du chanfrein du trou traversant 62 de l'embase 48 ainsi qu'un système de blocage 70, comme un écrou par exemple, relié à la tige 66 et plaqué contre la platine 56.

Pour chaque deuxième élément de fixation 60, 60', la paroi aérodynamique 42 comprend un trou traversant 72, qui présente un chanfrein au niveau de la surface externe 42.1 de la paroi aérodynamique, et la platine 56 comprend un trou traversant 74. En complément, chaque deuxième élément de fixation 60, 60' comprend une tige 76 logée dans les trous traversants 72, 74 de la paroi aérodynamique 42 et de la platine 56, une tête fraisée 78 logée au niveau du chanfrein du trou traversant 72 de la paroi aérodynamique 42 ainsi qu'un système de blocage 80, comme un écrou par exemple, relié à la tige 76 et plaqué contre la platine 56.

Selon le premier mode de réalisation, les premiers et deuxièmes éléments de fixation 58, 58', 60, 60' sont de type affleurant au niveau de la surface externe 42.2 de la paroi aérodynamique 42 et ne perturbent quasiment pas le flux d'air 44.

Pour améliorer les caractéristiques aérodynamiques, le jeu de montage prévu entre la découpe 52 et l'embase 48 comprend un joint ou un mastic 81 affleurant la surface externe 42.1 de la paroi aérodynamique.

Le procédé de fixation du générateur de tourbillons 40 selon le premier mode de réalisation comprend les étapes :
- de réalisation de la découpe 52,
- de fixation de la platine 56 en perçant simultanément la platine 56 et la paroi aérodynamique 42 et en mettant en place les deuxièmes éléments de fixation 60, 60',
- de fixation du générateur de tourbillons 40 depuis l'extérieur de la paroi aérodynamique 42 en perçant simultanément l'embase 48 et la platine 56 et en mettant en place les premiers éléments de fixation 58, 58', et
- d'application du joint ou mastic 81 dans le jeu prévu entre la découpe 52 et l'embase 48.

Selon ce premier mode de réalisation, l'embase 48 est intégrée dans la paroi aérodynamique 42 et offre une surface d'appui 48.2 ou semelle parallèle à la paroi aérodynamique 42. En complément, le système de fixation 54 comprend un élément tel qu'une platine 56 qui épouse les formes de la semelle et de la surface interne 42.2 de la paroi aérodynamique 42.

Selon un deuxième mode de réalisation visible sur les figures 5, 8 et 9, la paroi active 46 du générateur de tourbillons 40 comprend au moins un prolongement 82 en saillie par rapport à la surface interne 42.2 de la paroi aérodynamique 42. Selon une configuration, la paroi active 46 comprend un unique prolongement 82 qui s'étend quasiment sur toute la longueur du générateur de tourbillons 40. Selon une autre configuration visible sur la figure 5, la paroi active 46 comprend plusieurs prolongements 82 disjoints, répartis sur la longueur du générateur de tourbillons 40.

En complément, la paroi aérodynamique 42 comprend au moins une découpe 84 configurée pour loger la paroi active 46 ou chaque prolongement 82, chaque découpe 42 et la paroi active 46 ou chaque prolongement 82 ayant des pourtours identiques à un jeu de montage près.

Selon le deuxième mode de réalisation, le système de liaison 54 comprend :
- au moins une cornière 86 qui présente une première aile 86.1, plaquée contre le prolongement 82 de la paroi active 46, et une deuxième aile 86.2 plaquée contre la surface interne 42.2 de la paroi aérodynamique 42,
- au moins un premier élément de fixation 88 reliant le prolongement 82 de la paroi active 46 et la première aile 86.1 de la cornière 86, et
- au moins un deuxième élément de fixation 90 reliant la paroi aérodynamique 42 et la deuxième aile 86.2 de la cornière 86.

Selon une configuration, le système de liaison 54 comprend deux cornières 86, 86' positionnées de part et d'autre de chaque prolongement 82 de la paroi active 46, les premières ailes 86.1 des première et deuxième cornières 86, 86' étant positionnées de part et d'autre du prolongement 82 et plaquées contre les deux faces opposées du prolongement 82.

Selon une configuration, le système de liaison 54 comprend une série de premiers éléments de fixation 88, chacun d'eux traversant les deux premières ailes 86.1 des cornières 86, 86' et le prolongement 82. Selon un mode de réalisation, chaque premier élément de fixation 88 est un rivet ou un boulon.

Le système de liaison 54 comprend une première série de deuxièmes éléments de fixation 90 reliant la deuxième aile 86.2 de la première cornière 86 et la paroi aérodynamique 42, disposés d'un premier côté de la paroi active 46, ainsi qu'une deuxième série de deuxièmes éléments de fixation 90' reliant la deuxième aile 86.2 de la deuxième cornière 86' et la paroi aérodynamique 42, disposés d'un deuxième côté de la paroi active 46.

Pour chaque deuxième élément de fixation 90, 90', la paroi aérodynamique 42 comprend un trou traversant 92, qui présente un chanfrein au niveau de la surface externe 42.1 de la paroi aérodynamique 42, et la deuxième aile 86.2 de chaque cornière 86, 86' comprend un trou traversant 94. En complément, chaque deuxième élément de fixation 90, 90' comprend une tige 96 logée dans les trous traversants 92, 94 de la paroi aérodynamique 42 et les deuxièmes ailes 86.2 des cornières 86, 86', une tête fraisée 98 logée au niveau du chanfrein du trou traversant 92 de la paroi aérodynamique 42 ainsi qu'un système de blocage 100, comme un écrou par exemple, relié à la tige 96 et plaqué contre l'une des deuxièmes ailes 86.2 des cornières 86, 86'.

Selon le deuxième mode de réalisation, les première et deuxième ailes 86.1, 86.2 des cornières 86, 86' peuvent être perpendiculaires. Dans ce cas, la paroi active 46 du générateur de tourbillons 40 est perpendiculaire à la paroi aérodynamique 42. Les première et deuxième ailes 86.1, 86.2 des cornières 86, 86' peuvent ne pas être perpendiculaires. Dans ce cas, la paroi active 46 du générateur de tourbillons 40 est inclinée par rapport à la paroi aérodynamique 42.

Comme pour le premier mode de réalisation, le jeu de montage prévu entre chaque découpe 84 de la paroi aérodynamique 42 et la paroi active 46 ou chaque prolongement 82 comprend un joint ou un mastic affleurant la surface externe 42.1 de la paroi aérodynamique.

Selon ce deuxième mode de réalisation, chaque prolongement 82 forme une semelle qui se loge dans une découpe 84 de la paroi aérodynamique 42 et le système de liaison 54 comprend un élément tel qu'une cornière 86 qui épouse les formes de la semelle et de la surface interne 42.2 de la paroi aérodynamique 42.

Quel que soit le mode de réalisation, le système de liaison 54 comprend au moins un support, comme une platine 56 ou une cornière 86, 86', en partie plaquée contre la surface interne 42.2 de la paroi aérodynamique 42, au moins un premier élément de fixation 58, 58', 88 reliant le support et la paroi active 46 ainsi qu'au moins un deuxième élément de fixation 60, 60', 90, 90' reliant le support et la paroi aérodynamique 42. Chaque support est relié à la paroi aérodynamique 42 par des deuxièmes éléments de fixation 60, 60', 90, 90' présentant une tête affleurante au niveau de la surface externe 42.1 de la paroi aérodynamique 42. Chaque support est disjoint de la paroi active 46.

Selon une autre particularité, la paroi active 46 comporte au moins une portion qui se loge dans un découpe 52, 84 de la paroi aérodynamique. De plus, la zone de jonction entre la paroi active 46 et l'élément de liaison est prévue au niveau de la surface interne 42.2 de la paroi aérodynamique 42 ou dans une zone interne délimitée par la paroi aérodynamique 42.

L'invention permet d'éviter l'apparition de traînées parasites présentes dans le cas des générateurs de tourbillons de l'art antérieur, avec un impact négligeable sur la masse embarquée et le temps d'assemblage.

## Revendications

1. Aéronef comprenant une paroi aérodynamique (42) et au moins un générateur de tourbillons (40), ladite paroi aérodynamique (42) présentant une surface externe (42.1) sur laquelle s'écoule un flux d'air (44) en vol et une surface interne (42.2) opposée à la surface externe (42.1), le générateur de tourbillons (40) comprenant au moins une paroi active (46) en saillie par rapport à la surface externe (42.1) de la paroi aérodynamique (42) et un système de liaison (54) reliant le générateur de tourbillons (40) à la paroi aérodynamique (42), **caractérisé en ce que** le système de liaison (54) comprend au moins un support en partie plaqué contre la surface interne (42.2) de la paroi aérodynamique (42), au moins un premier élément de fixation (58, 58', 88) reliant le support et la paroi active (46) ainsi qu'au moins un deuxième élément de fixation (60, 60', 90, 90') reliant le support et la paroi aérodynamique (42).

2. Aéronef selon la revendication 1, **caractérisé en ce que** le système de liaison (54) comprend une première série d'éléments de liaison (60, 90) disposés d'un premier côté de la paroi active (46) et une deuxième série d'éléments de liaison (60', 90') disposés d'un deuxième côté de la paroi active (46).

3. Aéronef selon la revendication 1 ou 2, **caractérisé en ce que** le générateur de tourbillons (40) comprend, en plus de la paroi active (46), une embase (48) qui présente une première face (48.1) affleurant la surface externe (42.1) de la paroi aérodynamique (42), au niveau de laquelle est prévue la paroi active (46), la paroi active (46) et l'embase (48) formant une unique pièce, **en ce que** chaque support est une platine (56), le (ou les) premier(s) élément(s) de fixation (58, 58) reliant l'embase (48) et chaque platine (56) et **en ce que** la paroi aérodynamique (42) comprend une découpe (52) configurée pour loger l'embase (48), la découpe (52) et l'embase (48) présentant des pourtours identiques à un jeu de montage près.

4. Aéronef selon la revendication précédente, **caractérisé en ce que** l'embase (48) comprend des première et deuxième parties (50, 50') disposées de part et d'autre de la paroi active (46), **en ce que** chaque platine (56) s'étend de part et d'autre de l'embase (48) et de la découpe (52) et **en ce que** le système de liaison (54) comprend une première série de premiers éléments de fixation (58) disposés au niveau de la première partie (50) de l'embase (48), une deuxième série de premiers éléments de fixation (58') disposés au niveau de la deuxième partie (50') de l'embase (48), une première série de deuxièmes éléments de fixation (60) disposés d'un premier côté de la découpe (52) et une deuxième série de deuxièmes éléments de fixation (60') disposés d'un deuxième côté de la découpe (52).

5. Aéronef selon la revendication précédente, **caractérisé en ce que** le système de liaison (54) comprend au moins une cale interposée entre chaque platine (48) et l'embase (48) et/ou la paroi aérodynamique (42).

6. Aéronef selon l'une des revendications 3 à 5, **caractérisé en ce que** le jeu de montage prévu entre la découpe (52) et l'embase (48) comprend un joint ou un mastic affleurant la surface externe (42.1) de la paroi aérodynamique (42).

7. Aéronef selon la revendication 1 ou 2, **caractérisé en ce que** la paroi active (46) comprend au moins un prolongement (82) en saillie par rapport à la surface interne (42.2) de la paroi aérodynamique (42), **en ce que** la paroi aérodynamique (42) comprend au moins une découpe (84) configurée pour loger la paroi active (46) ou chaque prolongement (82), chaque découpe (42) et la paroi active (46) ou chaque prolongement (82) ayant des pourtours identiques à un jeu de montage près et **en ce que** le système de liaison (54) comprend au moins une cornière (86) qui présente une première aile (86.1) plaquée contre le prolongement (82) de la paroi active (46) et une deuxième aile (86.2) plaquée contre la surface interne (42.2) de la paroi aérodynamique (42), le (ou les) premier(s) élément(s) de fixation (88, 88') reliant le prolongement (82) de la paroi active (46) et la première aile (86.1) de chaque cornière (86, 86'), et le (ou les) deuxième(s) élément(s) de fixation (90) reliant la paroi aérodynamique (42) et la deuxième aile (86.2) de chaque cornière (86, 86').

8. Aéronef selon la revendication précédente, **caractérisé en ce que** le système de liaison (52) comprend des première et deuxième cornières (86, 86') positionnées de part et d'autre de chaque prolongement (82) de la paroi active (46), une première série de deuxièmes éléments de fixation (90) reliant la deuxième aile (86.2) de la première cornière (86) et la paroi aérodynamique (42), une deuxième série de deuxièmes éléments de fixation (90') reliant la deuxième aile (86.2) de la deuxième cornière (86') et la paroi aérodynamique (42) ainsi qu'une série de premiers éléments de fixation (88), chacun d'eux traversant les deux premières ailes (86.1) des première et deuxième cornières (86, 86') et le prolongement (82).

9. Aéronef selon la revendication 7 ou 8, **caractérisé en ce que** le jeu de montage prévu entre chaque découpe (84) de la paroi aérodynamique (42) et la paroi active (46) ou chaque prolongement (82) comprend un joint ou un mastic affleurant la surface externe (42.1) de la paroi aérodynamique (42).
